Europäisches Patentamt

European Patent Office

Office européen des brevets

(19)

(11) Publication number: **0 142 971 B1**

## EUROPEAN PATENT SPECIFICATION

(12)

(45) Date of publication of patent specification: **12.08.92**  (51) Int. Cl.⁵: **H01G 1/10,** H01G 1/147, H01G 13/00

(21) Application number: **84307790.0**

(22) Date of filing: **12.11.84**

Divisional application 89119905.1 filed on 12/11/84.

(54) **Capacitor and method of packaging it.**

(30) Priority: **17.11.83 US 552891**

(43) Date of publication of application:
**29.05.85 Bulletin 85/22**

(45) Publication of the grant of the patent:
**12.08.92 Bulletin 92/33**

(84) Designated Contracting States:
**CH DE FR GB IT LI NL**

(56) References cited:
**DE-C- 300 216      FR-A- 2 243 511
FR-A- 2 258 761      GB-A- 826 286
GB-A- 880 169      GB-A- 2 011 717
US-A- 2 921 246      US-A- 3 067 488
US-A- 3 965 552**

(73) Proprietor: **ILLINOIS TOOL WORKS INC.
8501 West Higgins Road
Chicago, Illinois 60631-2887(US)**

(72) Inventor: **Rayburn, Charles C.
1920 Burnt Bridge Road Apt. 221
Lynchburg Virginia 24503(US)**

(74) Representative: **Rackham, Stephen Neil et al
GILL JENNINGS & EVERY 53-64 Chancery
Lane
London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a metal film parallel plate capacitor and its packaging.

A typical metal film parallel plate capacitor comprises a plurality of layers of dielectric material each coated with a metallic film and arranged in a stack with the metallic film of each layer being separated by the dielectric material from the metallic film of an adjacent layer, a protective means for protecting the stack of layers from the environment, and electrical connection means connected to the metallic films.

At present, metal film parallel plate capacitors are packaged in a number of ways. For example, they are inserted within a plastic box and encapsulated within the box by an epoxy resin or a similar material to ensure retention of the capacitor within the box and to protect it from the environment as well as to enhance the pull away strength of the electrical connection between the electrical leads and the capacitor structure. Another common means of packaging such capacitors is to suspend the capacitors within an epoxy resin material and thereby coat the entire capacitor and a small portion of its lead structure with an epoxy resin material. This packaging method also is designed to environmentally protect the capacitor as well as to enhance pull away strength of the electrical lead-to-capacitor bond. The electrical lead-to-capacitor bond is accomplished in such prior art devices as addressed above by providing a spray metal zinc-tin coating to interconnect alternate layers of metallised film and soldering the electrical leads to that zinc-tin coating. There are certain problems attendant to such a lead connection process, chief among which is the problem of possible reflow of the electrical lead-to-capacitor bond caused by heat applied to the electrical leads during the process of attaching the leads to an assembly such as a printed circuit board. Such reflow serves to weaken the physical electrical lead-to-capacitor bond and thereby perhaps even alter the electrical quality of the bond as well.

Further, the epoxy resins and similar materials used to encapsulate capacitors presently are not impervious to moisture or other contaminants and incursion of moisture or other contaminants may occur, thereby altering, perhaps significantly, the electrical characteristics of the encapsulated device.

GB-A-2011717 describes a method of manufacturing a metal film parallel plate capacitor comprising a plurality of layers of dielectric material each coated with a metallic film and arranged in a stack with the metallic film of each layer being separated by the dielectric material from the metallic film of an adjacent layer, wrapping means extending around all side faces of the stack of layers for protecting the stack of layers from the environment, and electrically conductive coatings applied to and covering end faces of the stack of layers and connected to the metallic films.

According to this invention such a capacitor is characterised in that the wrapping means provides mechanical support to increase the resistance to delamination of the stack of layers and comprises a thermally insulative tape wound around the stack of layers, or a thermally insulative sleeve of heat shrinkable material applied around and shrunk onto the stack of layers, whereby the capacitor is mountable directly on to a circuit board in a leadless fashion.

A particular example of a device in accordance with this invention will now be described with reference to the accompanying drawings; in which:-

Figure 1 is a perspective view of the capacitor prior to application of a sealant with tape partially pulled away to illustrate wrapping the tape around the device; and,

Figure 2 is a transverse section through the capacitor.

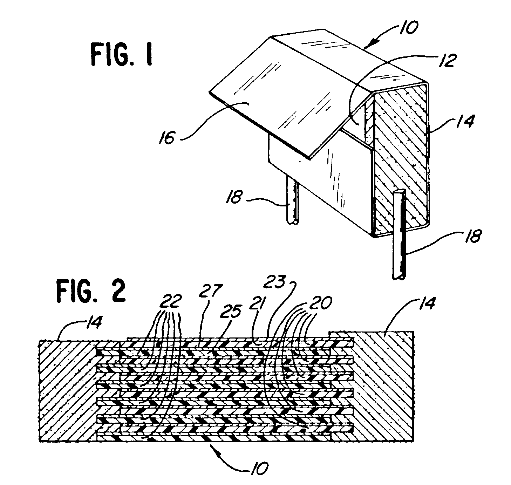

A capacitive device 10 is shown in Figure 1 comprising a plurality of capacitive structures 12 coated at each end with a porous metal conductive material 14 and wrapped with a wrapping means such as adhesive tape 16 to provide additional physical strength to the capacitive device 10 in order that the capacitive device 10 may better resist delamination of its plurality of capacitive strata 12 and, further, to enhance resistance of the capacitive device 10 to incursions of humidity and other contaminants. Of course, other wrapping materials, such as heat shrinkable material, could be used in lieu of tape. In such an embodiment of the present invention, the heat shrinkable material is applied to the capacitive device 10 and subjected to heat to form a sleeve about the capacitive device 10 and conforming to the shape thereof. Electrical leads 18 may be attached to the capacitive device 10 by fusion with the porous metal conductive material 14 through a process described in detail in divisional application EP-A-0355870.

In accordance with the present invention the wrapping means comprises thermally insulative tape (or heat shrinkable material which is heat insulative at processing temperatures to which the capacitive device 10 is subjected during mounting to an assembly) thereby allowing the electrical leads 18 to be omitted and enabling mounting of the capacitive device 10 in leadless fashion.

In Figure 2 a capacitive device 10 is shown schematically in transverse section revealing alternating plates of a first group of plates 20, each of which plates has a layer of dielectric material 21 with metallic film 23 attached thereto and a second group of plates 22 of similarly formed layers of dielectric material 25 and attached metallic film 27 structure. As is shown in Figure 2 the first group of plates 20 alternates with the second group of plates 22 with each respective group 20, 22 being aligned within itself yet as a group offset from the other group so that, at the right side of Figure 2, the first group of plates 20 is electrically connected in common by a porous metal conductive material 14 and at the left side of Figure 2 the second group of plates 22 is electrically connected in common by porous metal conductive material 14.

A sealant is introduced by way of vacuum impregnation both within the interstices of the capacitive device 10 as well as between the capacitive device 10 and the tape or other wrapper 16. A common sealant used for such a purpose is wax. Since wax has a higher dielectric constant than the air it is displacing from the interstices of the capacitive device 10 the dielectric constant of the capacitive device 10 will be improved by this impregnation process. Moreover, the wax used in the preferred embodiment of the present invention is extremely successful at preventing incursions of moisture in humid conditions, a common problem among capacitive devices of the prior art type described above.

The preferred embodiment of the present invention employs a single-metal porous metal conductive material 14. Aluminium has been found to be particularly successful in this application.

The present invention is designed to provide a capacitive device which will be competitive both in terms of price as well as in terms of electrical performance in today's marketplace wherein capacitive devices of the type contemplated by this invention (i.e. metallized film parallel plate capacitors) have become essentially commodity items and, as such, extremely price competitive. It is essential that a producer of capacitive devices desiring to remain commercially competitive be able to reduce his cost of manufacture as much as possible without reducing the electrical performance of the devices. The present invention fulfills both of those essentials of the marketplace; in fact, the electrical performance of this device is enhanced while its cost of manufacture is significantly reduced.

## Claims

1.  A metal film parallel plate capacitor (10) comprising a plurality of layers of dielectric material (21) each coated with a metallic film (23) and arranged in a stack with the metallic film (23) of each layer being separated by the dielectric material (21) from the metallic film of an adjacent layer, wrapping means (16) extending around all side faces of the stack of layers for protecting the stack of layers from the environment, and electrically conductive coatings (14) applied to and covering end faces of the stack of layers and connected to the metallic films (23),

characterized in that the wrapping means (16) provides mechanical support to increase the resistance to delamination of the stack of layers and comprises a thermally insulative tape wound around the stack of layers, or a thermally insulative sleeve of heat shrinkable material applied around and shrunk onto the stack of layers, whereby the capacitor is mountable directly on to a circuit board in a leadless fashion.

2.  A capacitor according to claim 1, in which sealing means are included impregnated into the stack of layers to displace fluid contaminants, introduced between the outside of the stack and the wrapping means (16) and upon exposed surfaces to seal the capacitor (10) against incursions by humidity or other contaminants.

3.  A capacitor according to claim 1 or 2, in the electrically conductive coating (14) is a coating of a single-metal porous metal material such as porous aluminium.

## Revendications

1.  Condensateur (10) à plaques parallèles et films métalliques comportant plusieurs couches d'une matière diélectrique (21) revêtues chacune d'un film métallique (23) et disposées dans un empilage, le film métallique (23) de chaque couche étant séparé par la matière diélectrique (21) du film métallique d'une couche adjacente, un moyen d'enveloppement (16) s'étendant autour de la totalité des faces latérales de l'empilage de couches pour protéger l'empilage de couches de l'environnement, et des revêtements électriquement conducteurs (14) appliqués à, et recouvrant, des faces extrêmes de l'empilage de couches et connectés aux films métalliques (23),

caractérisé en ce que le moyen d'enveloppement (16) procure un support mécanique pour accroître la résistance à la déstratification de l'empilage de couches et comporte un ruban thermiquement isolant enroulé autour de l'empilage de couches, ou un manchon thermiquement isolant en matière thermorétractable appliqué autour de, et rétracté sur, l'empilage de couches, afin que le condensateur puisse être monté directement sur une plaquette à circuit, sans fils conducteurs.

2.  Condensateur selon la revendication 1, dans lequel un moyen d'étanchéité est inclus, imprégné dans l'empilage de couches pour chasser des contaminants fluides, introduits entre le côté extérieur de l'empilage et le moyen d'enveloppement (16) et sur des surfaces à découvert pour protéger de façon étanche le condensateur (10) contre des pénétrations d'humidité ou d'autres contaminants.

3.  Condensateur selon la revendication 1 ou 2, dans lequel le revêtement électriquement conducteur (14) est un revêtement d'une matière métallique poreuse à un seul métal telle que de l'aluminium poreux.

**Patentansprüche**

1.  Paralleler Plattenkondensator (10) mit Metallüberzug, der mehrere Schichten eines dielektrischen Materials (21) aufweist, die jeweils mit einem Metallüberzug (23) beschichtet und in einem Stapel angeordnet sind, wobei der Metallüberzug (23) jeder Schicht durch das dielektrische Material (21) von dem Metallüberzug einer benachbarten Schicht getrennt ist, ein Umhüllungsmittel (16), das sich um alle Seitenflächen des Stapels von Schichten erstreckt, um den Stapel von Schichten vor der Umgebung zu schützen, und der elektrisch leitende Abdeckungen (14) aufweist, die den Endflächen des Stapels von Schichten zugeführt sind, diese abdecken und mit den Metallüberzügen (23) verbunden sind, dadurch gekennzeichnet, daß das Umhüllungsmittel (16) eine mechanische Stütze darstellt, um den Widerstand gegen ein Auftrennen des Stapels von Schichten zu erhöhen, und ein thermisch isolierendes Band, welches um den Stapel von Schichten gewunden ist, oder eine thermisch isolierende Hülse aus einem schrumpfbaren Material aufweist, die um den Stapel von Schichten angeordnet und auf diesem geschrumpft ist, wodurch der Kondensator direkt in einer leitungsfreien Weise auf einer Verdrahtung montierbar ist.

2.  Kondensator nach Anspruch 1, worin ein in dem Stapel der Schichten imprägniertes Dichtungsmittel zur Verdrängung von flüssigen Verunreinigungen vorgesehen ist, das zwischen der Außenseite des Stapels und dem Umhüllungsmittel (16) sowie auf exponierten Flächen zugeführt ist, um den Kondensator (10) gegen ein Eindringen von Feuchtigkeit oder anderen Verunreinigungen abzudichten.

3.  Kondensator nach Anspruch 1 oder 2, worin die elektrisch leitende Abdeckung (14) eine Abdeckung aus einem einzelnen, porösen Metallmaterial wie poröses Aluminium ist.

FIG. 1

FIG. 2